Europäisches Patentamt

European Patent Office

Office européen des brevets

(11) Publication number: **0 236 130**
**A2**

## (12) EUROPEAN PATENT APPLICATION

(21) Application number: **87301862.6**

(22) Date of filing: **04.03.87**

(51) Int. Cl.⁴: **B 62 D 61/12**
**B 61 D 3/18**

(30) Priority: **04.03.86 GB 8605262**

(43) Date of publication of application:
**09.09.87 Bulletin 87/37**

(84) Designated Contracting States:
**AT BE CH DE ES FR GB IT LI LU NL SE**

(71) Applicant: **TRAILER TRAIN LIMITED**
**Alliance House 12 Caxton Street**
**London SW1H 0QS (GB)**

(72) Inventor: **Thorpe, Roger William**
**44 Cromarty Road**
**Stamford Lincolnshire (GB)**

(74) Representative: **Thiemann, Peter Albert William et al**
**LLOYD WISE, TREGEAR & CO. Norman House 105-109**
**Strand**
**London WC2R 0AE (GB)**

(54) Suspension system for a semi-trailer or other vehicle.

(57) A suspension system is described which is suitable for a vehicle having a body (I) and at least one wheel axle assembly (3-6) but which is especially suitable for a semi-trailer used in a road/rail transport system such as that described in European Patent Application No. 84305l07.6. In the described suspension system the or each wheel axle assembly is mounted on support means (7) connected at one end to air bag suspension means (9), and a curved suspension arm (l0) extends from a pivot point (ll) above the air bag suspension means to the other end of the support means. Means are provided for pivoting the suspension arm from a road mode position to a retracted position and there are means for locking the system in each position.

FIG.2.

**Description**

SUSPENSION SYSTEM FOR A SEMI-TRAILER OR OTHER VEHICLE

This invention relates to a suspension system for a semi-trailer or other vehicle. The suspension system of this invention is particularly suitable for semi-trailers which are used in a road/rail transport system such as that described in the specification of our European Patent Application No. 84308107.6. However the present suspension system is not limited to such semi-trailers and may be used on other semi-trailers or other vehicles.

In the transport system described in the aforesaid specification, a semi-trailer, in its road mode, is backed until its rear end lies over a bogie to which the semi-trailer is subsequently coupled. It may be desirable or necessary to raise the rear end of the semi-trailer in order to position it correctly over the bogie and in order to enable the semi-trailer to meet the rail loading gauge it may be necessary or desirable to lower the semi-trailer on to the bogie a greater distance than is permitted by present wheel suspension systems.

According to the present invention there is provided a suspension system for a semi-trailer or other vehicle having a body, at least one wheel axle assembly and an air bag suspension, the or each wheel axle assembly being movable relative to the body, characterised in that the or each wheel axle assembly is mounted on support means connected at one end to air bag suspension means and in that a curved suspension arm extends from a pivot point about the air bag suspension means to the other end of the support means, there being means for pivoting the arm from a road mode position to a retracted position, and there being means for locking the system in each of said positions.

By using this suspension system, it is possible to elevate the wheel axle assembly and thus the wheels, a greater distance than in a conventional system where the extent of the elevation depends upon the collapse of the air bag of the air bag suspension means.

Preferably the support means is in the form of leaf spring means and it will be appreciated that in general there will be two leaf springs each associated with a respective air bag and a curved arm but more than two leaf springs, air bags and curved arms may, of course, be employed. Alternatively, the support means could be in the form of a rigid bar. The other end of the leaf spring or bar is connected to the curved arm by a conventional resilient coupling.

It is desirable to provide the system with a damping mechanism as is usual, and with the present system the damping mechanism will be provided between the axle assembly and each curved arm of the system.

Conveniently a chain drive is provided for pivoting the arm and raising the wheel axle assembly relative to the body. The chain drive may comprise a chain secured at one end to a lug on the wheel axle assembly and secured at the other end to a cross-bar movable by a hydraulic piston and cylinder arrangement. There may be one chain, or two chains, each associated with a respective suspension arm.

In a preferred embodiment of the invention it is possible to provide a conventional arrangement for over-inflating the air bag means, whereby it is possible to elevate the body of the vehicle relative to the wheels to enable, for instance, a bogie to be placed under the rear of the vehicle.

In order to enable the invention to be more readily understood, reference will now be made to the accompanying drawings, which illustrate diagrammatically and by way of example an embodiment thereof, and in which:-

Figure I is rear view of part of a semi-trailer showing a suspension system,

Figure 2 is a sectional view at right angles to the wheel axle of the suspension-system shown in Figure I in a normal road mode,

Figure 3 is a view similar to Figure 2 but showing the system in a retracted mode,

Figure 4 is a plan view of mechanism for moving the suspension system between the modes shown in Figures 2 and 3.

Referring now to the drawings, there is shown a suspension system for a semi-trailer. The semi-trailer has a body I, the base of which is shown in Figure I. Two I-section beams 2 extend longitudinally below the body and a wheel axle assembly is attached to the beams 2 by means of a suspension system.

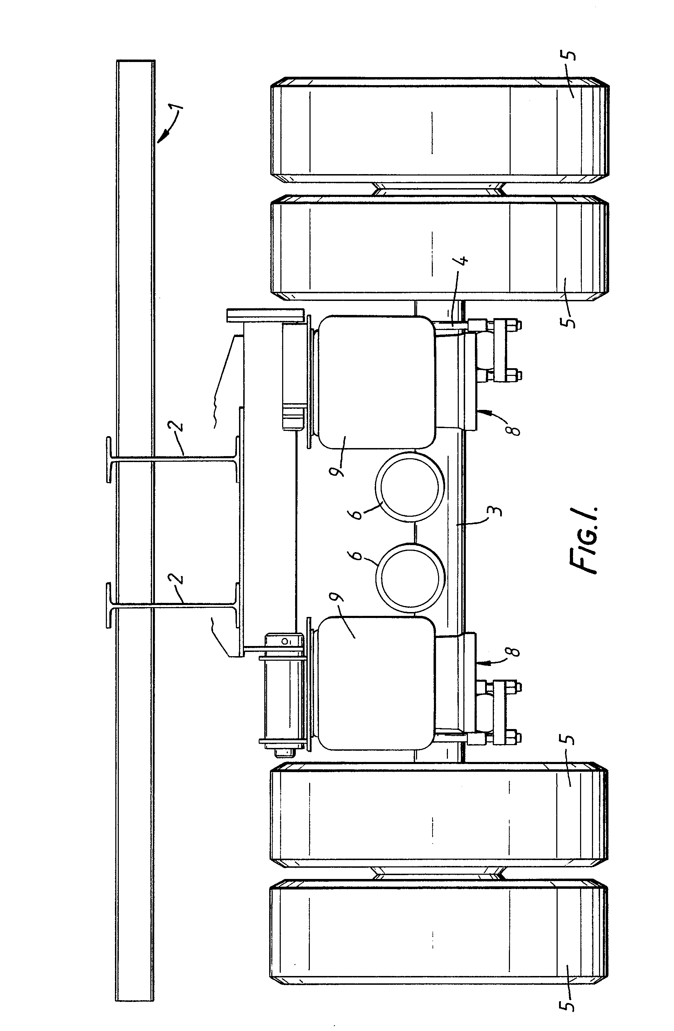

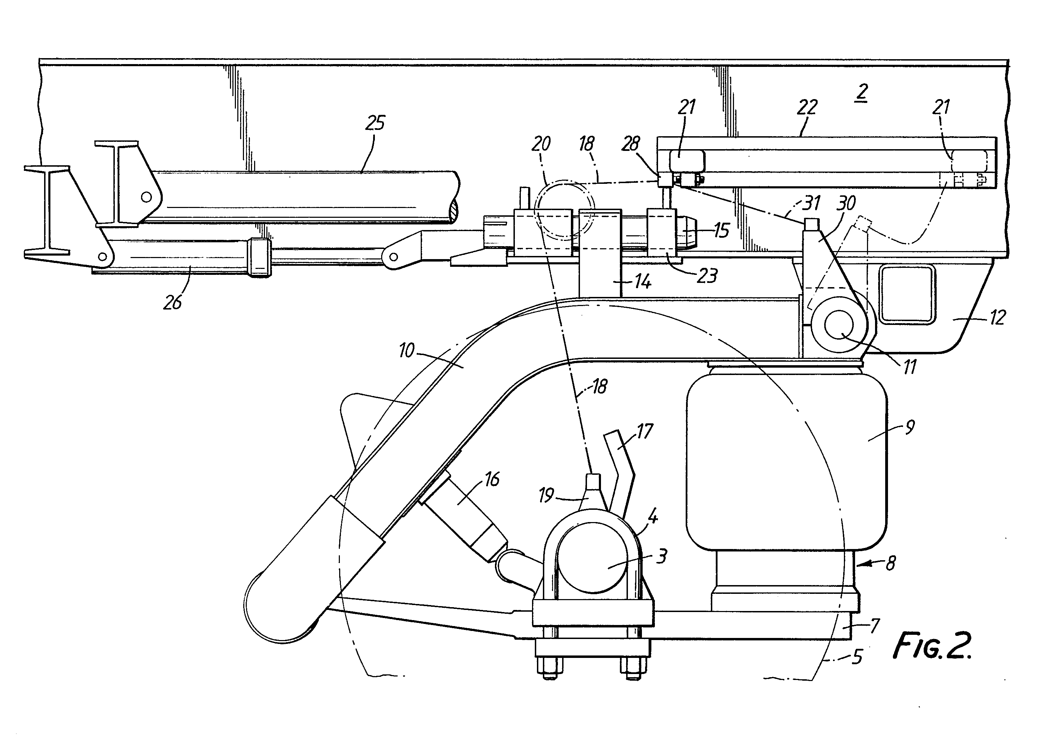

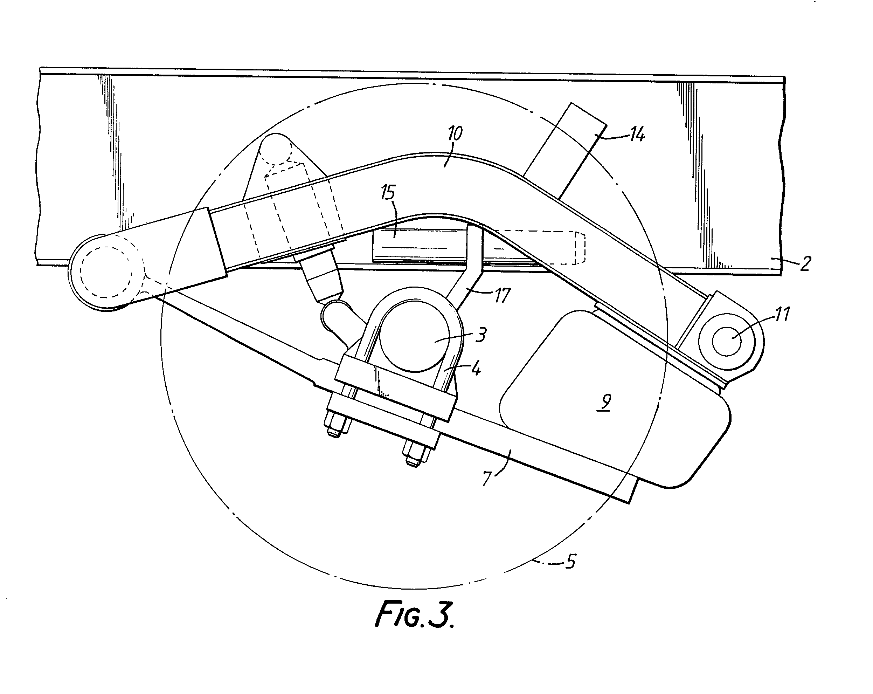

The wheel axle assembly comprises a wheel axle casing 3 housing a wheel axle, two pairs of road wheels 5 and two conventional brake actuators 6. The wheel axle assembly is mounted on two steel leaf springs 7 by U-bolts 4 as shown in Figures 2 and 3. At one end, each leaf spring is connected to an air bag suspension 8 including an air bag 9.

At each side of a longitudinal axis of the semi-trailer, a curved suspension arm I0 is mounted at one end on a horizontal transverse pin II about which it can pivot and which is mounted in a cross-member I2 secured to the beams 2. The air bag suspension is mounted between this end of the arm I0 and one end of the leaf spring 7 and the other end of the arm I0 is pivotally secured to the other end of the leaf spring 7. In its middle region, the arm I0 has an apertured lug I4 extending upwardly and to one side of the arm, and a slidable locking pin I5 is provided for engaging the aperture in the lug I4, thereby locking the arm and the suspension system in the position shown in Figure 2 which is the road mode with the wheels 5 in engagement with the road. A damping mechanism I6 is mounted between the axle casing 3 and the arm I0 and is a conventional form of damping mechanism. The axle casing 3 is also provided with an apertured lug I7 extending upwardly and to one side similar to the lug I4.

If the semi-trailer body is supported the road wheels can be raised by the suspension system or alternatively the semi-trailer body can lowered on its wheels or on to a support by the suspension. In order to effect this movement of the road wheels relative to the semi-trailer body, the pins l5 are withdrawn from engagement with the lugs l4, the air bags are allowed to collapse and the wheel axle assembly is raised by mechanism to be described until the suspension system reaches the position shown in Figure 3 and can be locked in this position by the engagement of the pins l5 in the apertures of the lugs l7.

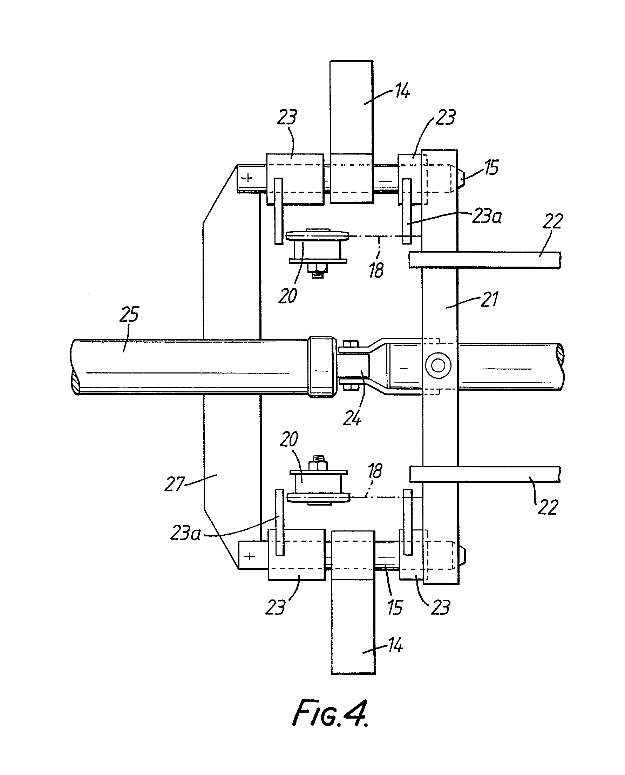

The raising mechanism for the wheels is shown in Figures 2 and 4 and comprises a chain drive in the form of two chains l8 one end of each of which is secured to a respective bracket l9 fixed to the axle casing 3. Each chain is passed around a chain drum 20 mounted in the underfloor structure of the semi-trailer and the other end is fixed at 28 to a cross bar 2l slidable along guideways 22 fixed to the chassis beams 2. Apertured blocks 23 are mounted on the chassis beams 2 by brackets 23a and serve to receive the locking pins l5 and which secure the lugs l4 and thus the arms l0 in place. At its centre, the cross bar 2l is coupled by a coupling 24 to the piston rod of a hydraulic cylinder 25 for moving the cross bar 2l to the right in Figures 2 and 4. A further hydraulic cylinder 26 is provided and has its piston rod coupled to another cross bar 27 which carries at its ends the locking pins l5. In the region of the pins ll, each arm l0 has a further lug 30 which is connected by a short length of chain 3l to the connection point 28 for the respective chain l8.

Upon the operation of the hydraulic cylinders 25 and 26 by the operator, the cylinder 26 moves the cross bar 27 to the left in Figures 2 and 4, thereby removing the locking pins l5 from engagement with the blocks 23 and the lugs l4. The release of the lugs l4 permits movement of the arms l0 and the cylinder 25 is then able to move the cross bar 2l to the right in Figures 2 and 4 whereby the chains, being fixed to the brackets l9 move to raise the suspension system to the position shown in Figure 3. At this point the cylinder 26 is operated in the other direction and moves the locking pins to the right so that they can engage in the apertures in the lugs l7, which are appropriately positioned for this purpose, so as to lock the suspension in the elevated position.

It will be appreciated that when the suspension system moves form the position shown in Figure 2 to that shown in Figure 3, the arms l0 pivot about the pins ll and the air bags are vented to atmosphere.

In the elevated position of the suspension system shown in Figure 3, the further lug 30 occupies the position shown in broken lines in Figure 2 with the chain 3l hanging slack between the lug and the connection point 28 which has been moved to the right in Figure 2 by the movement of the cross bar 2l under the action of the hydraulic cylinder 25.

When the system is operated to lower the wheel axle assembly back to the position shown in Figure 2, the hydraulic cylinders are operated by the operator to release the lug l7 whereby the wheel axle assembly can drop under the action of gravity to the position shown in Figure 2. The cross bar 2l moves to the left in Figure 2 and when it reaches the full line position it will tighten the chain 3l, so that the arm l0 is forced into the lowered position to permit the locking pin l5 cleanly to enter the aperture in the lug l4 and so that any residual resilience in the air bag 9 which might prevent the suspension arm from reaching its end position is overcome.

As is conventional, the air bags 9 are pressurised and the ride height of the semi-trailer in the road mode is controlled by a levelling valve. In one modification of the present suspension system means is provided for isolating the levelling valve whereby the air bags can become over-inflated and thereby raise the semi-trailer body above the normal position.

As indicated above, the semi-trailers to which the present suspension system is fitted are particularly adapted for use in a road mode when connected to a tractor unit and in a rail mode when mounted in a bogie.

For normal road operation, the air bags are pressurised and the ride height is controlled in conventional manner with a levelling valve. If it is now desired to transfer to a rail mode and connect the rear end of the semi-trailer to the bogie, it may be necessary to raise the rear end of the semi-trailer and this can be effected in the manner indicated by isolating the levelling valve and over inflating the air bags. The body can then be lowered by venting the air bags to atmosphere and allowing the body to drop for connection to the bogie. After this the road wheels can be raised in the manner described above.

It will be appreciated that the present suspension system may be applied to a semi-trailer with any number of axles and where more than one axle is to be raised the lifting and locking mechanism including the hydraulic cylinders 25 and 26, cross bars 2l and 27 and locking pins l5 may be so interconnected that only one of each of the hydraulic cylinders is required. Alternatively, hydraulic cylinders 25 and 26 can be provided on each axle.

Furthermore, and in order to reduce weight, it is possible to use a single chain and chain drum for raising the wheel axle assembly and such a chain drive will preferably be positioned along the longitudinal axis of the semi-trailer body, with a lug replacing the lugs l9 mounted in the wheel axle assembly between the brake actuators 6.

The present suspension system may be operated manually using appropriate valves provided for each operation or alternatively the system may be controlled automatically be using a logic sequencing system.

## Claims

1. A suspension system for a semi-trailer or other vehicle having a body, at least one wheel axle assembly and an air bag suspension, the or each wheel axle assembly being movable relative to the body,
characterised in that the or each wheel axle assembly is mounted on support means connected at one end to air bag suspension means,

and in that a curved suspension arm extends from a pivot point above the air bag suspension means to the other end of the support means, there being means for pivotting the arm from a road mode position to a retracted position, and there being means for locking the system in each of said positions.

2. A suspension system as claimed in Claim I, wherein the support means comprises at least two leaf springs spaced apart from one another and mounted on each side of a longitudinal axis of the semi-trailer or other vehicle, each leaf spring being associated with a respective air bag and curved arm.

3. A suspension system as claimed in Claim I, wherein the support means comprises at least two rigid bars spaced apart from one another and mounted on each side of a longitudinal axis of the semi-trailer or other vehicle, each rigid bar being associated with a respective air bag and curved arm and each curved arm being connected to its associated rigid bar by a resilient coupling.

4. A suspension system as claimed in any one of Claims I to 3, wherein a damping mechanism is provided between the wheel axle assembly and the or each curved suspension arm.

5. A suspension system as claimed in any one of Claims I to 4, wherein levelling valve means is provided for the air bag suspension means, and wherein means is provided for isolating the levelling valve from means for inflating the air bag suspension means, whereby the latter can be over inflated to elevate the body of the semi-trailer or other vehicle relative to the wheel axle assembly.

6. A suspension system as claimed in any one of Claims I to 5, wherein the or each curved suspension arm has an apertured lug connected thereto and the wheel axle assembly has connecteed thereto an apertured lug corresponding to the or each apertured lug connected to the suspension arm, and wherein at least one slidable locking pin is provided for engaging the aperture in a lug on a curved suspension arm when the semi-trailer or other vehicle is in a road mode and for engaging the corresponding lug on the wheel axle assembly when the suspension arm and wheel assembly are in said retracted postion.

7. A suspension system as claimed in any one of Claims I to 7, wherein a chain drive is provided for raising the wheel axle assembly relative to the body.

8. A suspension system as claimed in Claim 8, wherein the chain drive comprises two chains each secured at one end to a lug on the wheel axle assembly to be raised and secured at their other ends to a cross-bar movable by hydraulic piston and cylinder arrangment.

9. A suspension system as claimed in any one of Claims I to 9, wherein a logic sequencing system is provided for automatically controlling the system.

FIG. 1.

FIG.2.

FIG. 3.

0236130

FIG.4.